# EUROPÄISCHE PATENTSCHRIFT

(11) **EP 1 281 563 B1**
(45) Veröffentlichungstag und Bekanntmachung des Hinweises auf die Patenterteilung: **20.07.2011**
(21) Anmeldenummer: 02008801.9
(22) Anmeldetag: 19.04.2002
(51) Int. Cl.: B60M 1/26

(54) **Nachspanneinrichtung für Fahrdrähte**
Tensioning device for contact wire
Dispositif de tensionnement pour fils de contact

(30) Priorität: 27.07.2001 AT 11802001
(43) Veröffentlichungstag der Anmeldung: 05.02.2003
(73) Patentinhaber: European Trans Energy GmbH, 1100 Wien (AT)
(72) Erfinder: Winter, Hubert, 8811 Scheifling, Nr.282 (AT)
(74) Vertreter: Itze, Peter

(56) Entgegenhaltungen:
- DE-C- 4 427 684
- PATENT ABSTRACTS OF JAPAN vol. 009, no. 084 (M-371), 13. April 1985 (1985-04-13) -& JP 59 213528 A (NIPPON KOKUYU TETSUDO;OTHERS: 01), 3. Dezember 1984 (1984-12-03)

## Beschreibung

Die gegenständliche Erfindung betrifft eine Nachspanneinrichtung für Fahrdrähte und/oder Tragseile von Fahrdrähten, insbesondere für die Eisenbahnstrecken, umfassend zumindest ein Gewicht, welches über Umlenkvorrichtungen mit dem zu spannenden Fahrdraht bzw. Tragseil verbunden ist und welches durch zwei im Wesentlichen senkrecht angeordnete Führungen geführt ist, wobei mit dem Gewicht verbundene Führungselemente in die Führungen eingreifen.

Eine derartige Anlag ist etwa aus der Veröffentlichung der GB 2 207 403 A oder der DE 44 27 684 C1 bekannt. Die GB 2 207 403 A lehrt, das Gewicht mittels Rollen in als H-Profile ausgebildeten senkrechten Anordnungen zu führen. Aus der DE 44 27 684 C1 ist zu entnehmen, dass die einzelnen Gewichtskörper des Gewichts an den Stirnseiten Lagerbolzen aufweisen, die mit ihren freien Enden in die Nuten von Führungsschienen eingreifen.

Beiden Anlagen ist gemeinsam, dass bei einem Riss des Fahrdrahts bzw. des Tragseils des Fahrdrahtes da Gewicht ungebremst nach unten fällt. Damit das Gewicht beim Herabfallen nicht die eigenen Führung zerstört, auf die Fahrbahn fällt oder beim Herabfallen darunter befindliche Anlagen zerstört oder auch Menschen gefährdet, müssen entsprechende Vorkehrungen getroffen werden. Das wurde bisher etwa durch sandgefüllte Vertiefungen im Boden oder - bei Montage in einem Tunnel - durch Nischen oder Vorsprünge an der Tunnelwand gelöst.

Die JP-59213528 zeigt eine Bremseinrichtung für Ausgleichsgewichte einer Nachspanneinheit für Fahrdrähte, wobei spezielle ausklappbare Bremskrallen bzw. Bremsklötze vorgesehen sind, welche beim Reißen des Spannseiles durch eine Feder in die Bremssstellung gebracht werden. Es muss dabei die gesamte Bremskraft durch die Bremskrallen bzw. -klötze aufgenommen werden.

Eine Aufgabe der vorliegenden Erfindung besteht nun darin, eine Vorrichtung zum Abbremsen des fallenden Gewichts zur Verfügung zu stellen.

Eine solche Vorrichtung ist im Anspruch angegeben.

Durch die Verwendung von Hebeln im Zusammenwirken mit den Führungselementen kann einem Seilriss insofern Rechnung getragen werden, als der Hebel durch das freigewordene Gewicht, das nun den Hebel nach unten zieht, das Führungselement einseitig belastet und verkippt und das Gewicht nicht nur abbremst, sondern am Fallen hindert. Durch zusätzlich eingebaute Federelemente, wie Druckfedern, wird die Bewegung des Hebels in Richtung der Führung beschleunigt, sodass das Gewicht bei einem Seilriss nahezu keine Bewegung vollführt.

Die erfindungsgemäße Anlage kann im Werk vorgefertigt und vor Ort mit geringem Aufwand montiert werden. Die Herstellung oder Montage von zusätzlichen Fangvorrichtungen entfällt.

Die Erfindung ist in den Figuren 1 bis 3 beispielhaft und schematisch dargestellt.
Fig. 1 zeigt die Vorderansicht und die Seitenansicht einer erfindungsgemäßen Nachspanneinrichtung.
Fig. 2 zeigt den Hebel in Seitenansicht und in Draufsicht.
Fig. 3 zeigt den Hebel in Eingriff mit dem Führungselement in Seitenansicht und in Draufsicht.

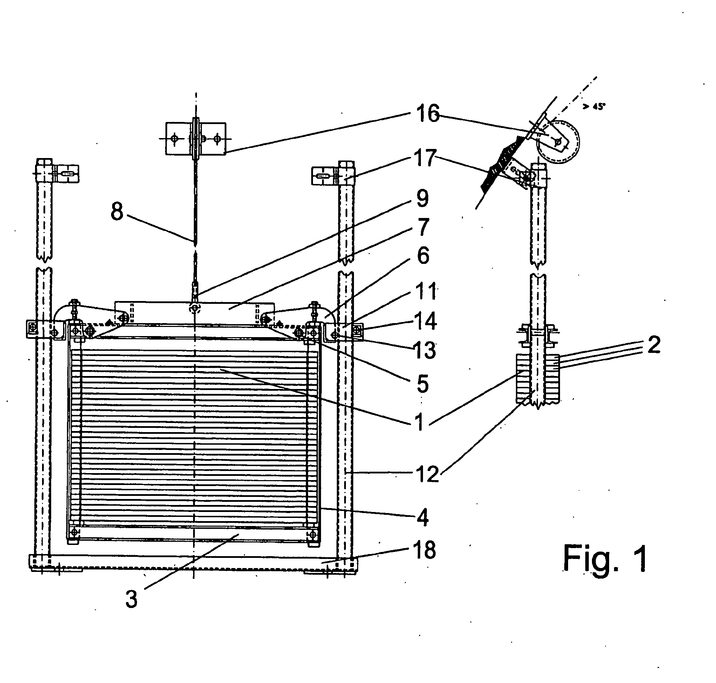

In Fig. 1 ist das rechteckige Gewicht 1 dargestellt, das aus mehreren in einem Rahmen 3 angeordneten Gewichtselementen 2 aufgebaut ist. Diese sind vorzugsweise aus Metallplatten gefertigt, die vom Rahmen 3 gehalten werden. Die Seitenprofile 4 des Rahmens 3 können einen T-förmigen Querschnitt aufweisen und die Gewichtselemente 2 eine schlitzförmige Ausnehmung, sodass das Seitenprofile 4 mit dem Längsteil des T-förmigen Querschnitts beidseitig in die Ausnehmungen der Gewichtselemente 2 eingreifen und diese somit im Rahmen 3 fixieren.

Der Rahmen 3 weist im Bereich der oberen Ecken kreisförmige Ausnehmungen auf, durch welche eine Hohlwelle 5 geführt ist, die fest mit dem zweiarmigen Hebel 6 verbunden ist und den Rahmen 3 drehbar mit dem Hebel 6 verbindet. Der jeweils innere Arm des Hebels 6 ist drehbar mit der Aufhängevorrichtung 7 des Gewichts 1 verbunden, an dem das zu spannende Tragseil bzw. der zu spannende Fahrdraht 8 mittels einer Pressabspannöse 9 befestigt ist. Die Aufhängevorrichtung 7 besteht aus zwei miteinander verbundenen Platten, die Langlöcher für die Verbindung mit dem Hebel 6 aufweisen. Das zu spannende Tragseil bzw. der zu spannende Fahrdraht 8 wird über eine hier an einer Tunnelwand befestigten Umlenkrolle 16 geführt.

Der jeweils äußere Arm des Hebels 6 weist halbkreisförmige Ausnehmungen auf, welche mit dem Bolzen 10 der Führungselemente 11 in Eingriff stehen. Die Führungselemente 11 umschließen die Führungen, die hier als Formrohre 12 mit quadratischem Querschnitt ausgebildet sind. Die Führungselemente 11 weisen zwei Bolzen 13 und 14 auf, die so angeordnet sind, dass bei waagrechter Stellung der Führungselemente 11 (und damit bei waagrechter Stellung des Hebels 6, wie in Fig. 1 dargestellt) diese entlang der Formrohre 12 hinauf- und hinabgleiten können. Der Anschlag des Hebels 6 wird durch die gerade Fläche des Hebels am Flacheisen an der Oberseite des Rahmens 3 gebildet. Die Schrauben 15 am äußeren Arm des Hebels 6 dienen als Führung für Druckfedern, mit den Sechskantmuttern 20 kann die Vorspannung der Druckfedern eingestellt werden.

Die Formrohre 12 sind mittels entsprechenden Führungen 17, 18 an der Tunnelwand befestigt.

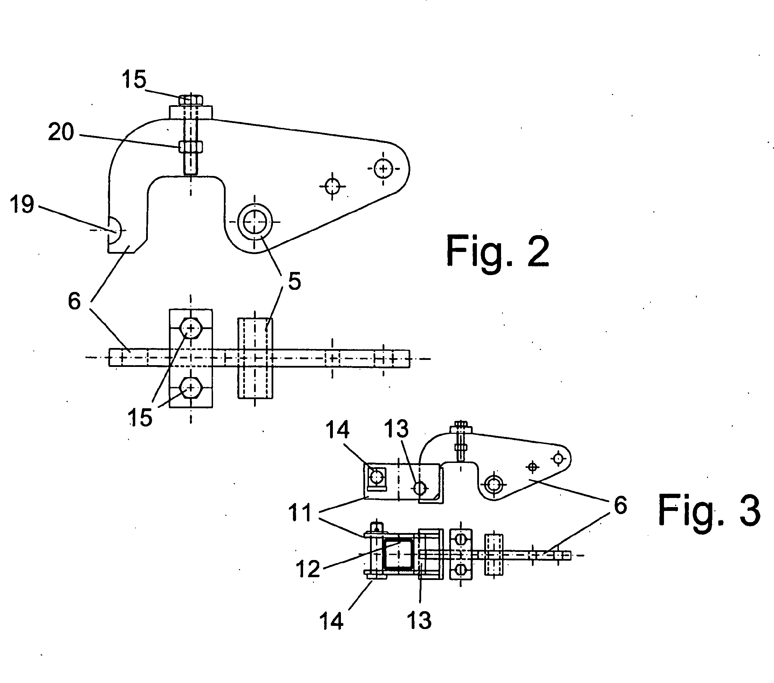

Fig. 2 zeigt den Hebel 6 mit der Ausnehmung 19, die einen Radius aufweisen, der um ein bis zwei Millimeter größer ist als der Radius des zugeordneten Bolzens 13 des Führungselements 11. Die Schrauben 15 am äußeren Arm des Hebels 6 dienen als Führung für Druckfedern, mit den aufgesetzten Sechskantmuttern 20 kann die Vorspannung der Druckfedern eingestellt werden. Die Hohlwelle 5 ist ebenfalls dargestellt.

Fig. 3 zeigt den Hebel 6 in Eingriff mit dem Führungselement 11 mit den beiden Bolzen 13 und 14, wobei das Führungselement 11 die Führungsstange 12 umgibt.

Im Betriebszustand steht das Tragseil bzw. der Fahrdraht 8 unter Spannung und die Aufhängevorrichtung 7 ist über den Hebel 6 mit dem Gewicht 1 belastet. Wenn das Tragseil bzw. der Fahrdraht 8 reisst, fällt das Gewicht 1 nach unten, nimmt dabei den Hebel 6 und dieser das Führungselement 11 mit, wodurch letzteres aufgrund der versetzten Anordnung der Bolzen 13 und 14 verkippt wird und eine weitere Bewegung des Gewichtes 1 nach unten verhindert. Durch die Anordnung von Druckfedern zwischen Hebel 6 und Gewicht 1 wird der Hebel 6 durch die Druckfedern nach oben beschleunigt und an der Führungsstange 12 angelegt, wodurch nahezu keine Bewegung des Gewichtes 1 nach unten erfolgt und dieses noch rascher an den Führungsstangen 12 festgeklemmt wird.

Die erfindungsgemäße Nachspanneinrichtung eignet sich besonders für die Anwendung im Tunnel, da die Nachspanneinrichtung an der Wand des Tunnels angeordnet werden kann und zusätzliche Auffangeinrichtungen, wie Fangkörbe oder sandgefüllte Mulden (die zusätzlich aufwändig hergestellt werden müssten) nicht nötig sind. Die Erfindung kann selbstverständlich auch auf freier Strecke eingesetzt werden, wobei die Montage der Nachspanneinrichtung an einem Masten erfolgen kann. Die Erfindung kann auch mit anderen gängigen Elementen des Oberleitungsbaues, wie Übersetzungen und weiteren Umlenkungen kombiniert werden.

## Patentansprüche

1. Nachspanneinrichtung für Fahrdrähte und/oder Tragseile von Fahrdrähten (8), insbesondere für Eisenbahnstrecken, wobei zumindest ein Gewicht (1), welches über Umlenkvorrichtungen (16) mit dem zu spannenden Fahrdraht bzw. Tragseil (8) verbunden ist, mittels zwei im Wesentlichen senkrecht angeordneten Führungen (12) geführt ist, wobei mit dem Gewicht (1) verbundene Führungselemente (11) an die Führungen (12) angreifen, **dadurch gekennzeichnet, dass** jedes Führungselement (11) die Führung (12) unter anderem mittels zweier parallel zueinander, aber normal zur Längsrichtung der Führung (12) angeordneter Bolzen (13, 14) umschließt, welche in Längsrichtung der Führung (12) gesehen in unterschiedlicher Höhe angeordnet sind, und dass der Hebel (6) einen (13) der Bolzen (13, 14) so weit umschließt, dass dieser vom Hebel (6) in Längsrichtung der Führung (12) mitgenommen wird.

## Claims

1. Tensioning device for contact wires and/or bearer cables of contact wires (8), in particular for railway lines, wherein at least one weight (1), which is connected to the contact wire or bearer cable (8) to be tensioned via deflection devices (16), is guided by two substantially vertically arranged guides (12), with guiding elements (11) connected to the weight (1) engaging on the guides (12), **characterised in that** each guiding element (11) encloses the guide (12) inter alia by means of two pins (13, 14) arranged parallel to each other but perpendicularly to the longitudinal direction of the guide (12), said pins being arranged at different levels, if viewed in the longitudinal direction of the guide (12), and **in that** the lever (6) encloses one (13) of the pins (13, 14) to such a degree that said pin is carried along by the lever (6) in the longitudinal direction of the guide (12).

## Revendications

1. Dispositif de tensionnement pour fils de contact et/ou câbles porteurs de fils de contact (8), en particulier pour les lignes ferroviaires, dans lequel au moins un poids (1), qui est connecté par le biais de dispositifs de renvoi (16) au fil de contact ou câble porteur (8) à tendre, est guidé au moyen de deux guidages (12) agencés sensiblement verticalement, dans lequel des éléments de guidage (11) connectés au poids (1) saisissent les guidages (12), **caractérisé en ce que** chaque élément de guidage (11) enferme le guidage (12) entre autres au moyen de deux boulons (13, 14) agencés parallèles l'un à l'autre mais perpendiculaires au sens longitudinal du guidage (12), qui sont agencés à hauteur différente vu dans le sens longitudinal du guidage (12), et **en ce que** le levier (6) enferme l'un (13) des boulons (13, 14) de telle façon que celui-ci est entraîné par le levier (6) dans le sens longitudinal du guidage (12).
